# EUROPEAN PATENT SPECIFICATION

(11) **EP 1 784 328 B1**
(45) Date of publication and mention of the grant of the patent: **12.03.2008**
(21) Application number: 05766091.2
(22) Date of filing: 19.07.2005
(51) Int. Cl.: B62D 63/06

(54) **UTILITY TRAILER HAVING AN IMPROVED PROTECTIVE BARRIER**
NUTZFAHRZEUGANHÄNGER MIT VERBESSERTER SCHUTZBARRIERE
REMORQUE UTILITAIRE EQUIPEE D'UNE BARRIERE DE PROTECTION AMELIOREE

(30) Priority: 27.07.2004 US 591091 P
(43) Date of publication of application: 16.05.2007
(73) Proprietor: BRP Finland OY, 96101 Rovaniemi (FI)
(72) Inventor: KANGRAS, Reino, FIN-61800 Kauhajoki (FI); MAHONEN, Heikki, FIN-96101 Rovaniemi (FI); KANTOLA, Juhana, FIN-96101 Rovaniemi (FI); RAPILA, Tero, FIN-96101 Rovaniemi (FI)
(74) Representative: Solf, Alexander
(86) International application number: PCT/EP2005/007833
(87) International publication number: WO 2006/010524

(56) References cited:
- CH-A5- 682 704
- US-A- 3 913 967
- US-A1- 2003 222 431

## Description

### FIELD OF THE INVENTION

The present invention relates to utility trailers, in particular to a utility trailer having a protective barrier to provide protection from objects sliding forward over the trailer's carrying base.

### BACKGROUND OF THE RELATED ART

It is often desired to transport materials such as sand, mud, rock and objects which are very long such as building materials or logs in a utility trailer pulled behind a tow vehicle such as an automobile or an ATV. Such utility trailers are typically used in two configurations. A first configuration is an open-box type trailer for carrying sand, mud or rack or other loose objects that need be surrounded by four walls to remain on the trailer. A second configuration is used when the objects to be transported are longer than the box itself, as is the case for building materials and logs as those objects would protrude beyond the front and rear end walls of the trailer. In this second configuration, the front and rear end walls of the box-type structure are removed enabling the longer objects to be placed onto the trailer's carrying base. As there is no protection for the tow vehicle were the objects to slide forward over the carrying base during transportation, some conventional trailers have a separate protector placed on the towing member of the trailer, between the carrying base and the vehicle. The protector prevents objects placed onto the carrying base from sliding beyond the protector and damaging the vehicle. This protector is normally a vertical wall of the same width as that of the trailer and made of a solid material such as steel or aluminum. It is permanently affixed in one location on the tow member between the carrying base and the tow vehicle. A hybrid configuration trailer also exists which allows for the benefits of both configurations. In trailers of this type, the carrying base is surrounded by four walls as described in the first configuration to carry sand and other small objects, but at least the front and rear walls are removable to allow the user to carry long objects. These types of trailers may be equipped with a protector as described above. While the hybrid configuration creates a more versatile trailer, the removed panels must be stored when removed thus creating an inconvenience to the user if the panels are later required but stored at a different location.

An example of a utility trailer having removable front and rear walls is shown in U.S. Patent 6,378,893, titled Extendable Trailer. U.S. Patent 6,378,893 shows a utility trailer having a load carrying bed surrounded by two upstanding side panels, a rear gate and a front gate. The trailer further includes a tongue and a pair of wheels. A manually removable tailgate either in a wall-forming configuration or a bed extending configuration. The front gate is coupled to the trailer bed by a plug-in-socket sliding arrangement with, upon removal, relative rotation of the plug and/or the entire gate 180 degrees about an axis of the socket permits movement of the tailgate from on orientation to the other. This allows the trailer to become open-ended and also to extend the trailer's load-carrying bed. Because the tailgate/frontgate is taken from a vertical orientation and replaced in a horizontal orientation to extend the carrying bed, there is no protection provided for objects sliding forward over the trailers carrying base unless the trailer is equipped with a separate protector.

Therefore, there exists a need for an improved utility trailer having a removable wall configuration.

### SUMMARY OF THE INVENTION

The present invention improves upon the conventional hybrid utility trailer design in that the removed wall or walls can be attached to the tow member, between the carrying platform and the tow vehicle, to provide protection to the tow vehicle from forward sliding objects. No separate protective barrier is required.

A benefit of some aspects of the invention is a utility trailer where the removed wall or walls are not required to be stored apart from the utility trailer when the use of the utility trailer does not require the front and rear walls. The removed walls are carried with the trailer and can be selectively removed and released as necessary.

Yet another aspect of the present invention provides a utility trailer comprising a horizontal base having opposed ends and opposed sides; an end wall removably attached to the horizontal base at one of the opposed ends; at least two wheels supporting the horizontal base; a tow member extending forwardly of the front end of the horizontal base and including an end adapted to connected to a tow vehicle, characterized in that the end wall, when removed from the horizontal base, is removably attachable to the tow member to provide protection from objects on the horizontal base that slide towards the tow vehicle.

Another aspect of the present invention provides the tow member with an end-wall support frame for providing removable attachment of the end wall to the tow member.

Yet another aspect of the present invention provides the end wall as the front end wall.

Still another aspect of the present invention provides the end wall as the rear end wall.

Another aspect of the present invention provides the utility trailer with a second end wall attached to the horizontal base and the other of the opposed ends; the second end wall, when removed from the horizontal base, being removably attached to the tow member to provide additional protection from objects on the horizontal base sliding toward the tow member.

Yet another aspect of the present invention provides the utility trailer with opposed side walls extending from the opposed sides of the horizontal base.

Still another aspect of the present invention has the end-wall support frame comprised of a pyramidal shaped structure having a first end attached to the tow member and a second end vertically above the first end, the first end and the second end having attachment portions to which the removable end wall can be attached.

These aspects as well as additional and/or alternative aspects, objects and features of the embodiments of the present invention will become apparent from the following description.

### BRIEF DESCRIPTION OF THE DRAWINGS

Having thus generally described the nature of the present invention, reference will now be made to the accompanying drawings, showing by way of illustration the preferred embodiments thereof, in which:

Figure 1 is a rear left perspective view of the utility trailer of the present invention.

Figure 1A is a front left perspective view of the utility trailer of figure 1;

Figure 2 is a rear left perspective view of the utility trailer of figure 1; with the rear and side walls removed, and the front wall removed and placed in the end-wall support frame;

Figure 2A is a front left perspective view of the utility trailer of figure 2;

Figure 3 is a front left perspective view of the utility trailer of a second embodiment of the present invention;

Figure 4 is a partial view of the tow member and the end wall support frame disassembled from the utility trailer of the second embodiment present invention;

Figure 5 is an exploded view of the upper bracket from the utility trailer of the second embodiment present invention;

Figure 6 is an exploded view of the lower bracket from the utility trailer of the second embodiment present invention; and

Figure 7 is an left-side elevational view of the end wall and fastening wall attached to the end wall support frame from the utility trailer of the second embodiment present invention.

### DESCRIPTION OF PREFERRED EMBODIMENTS

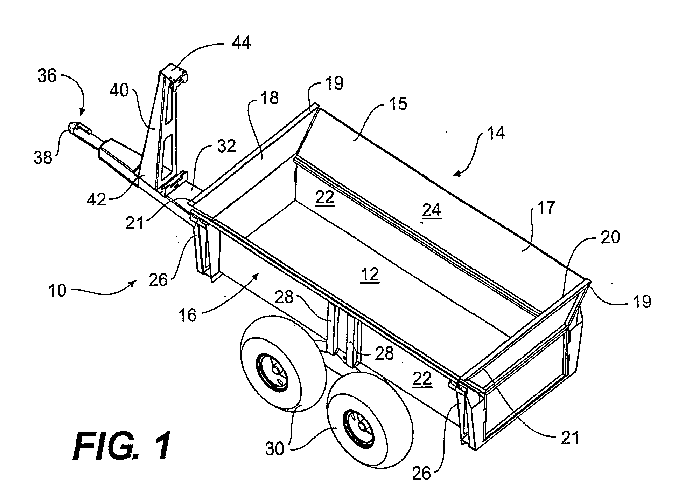

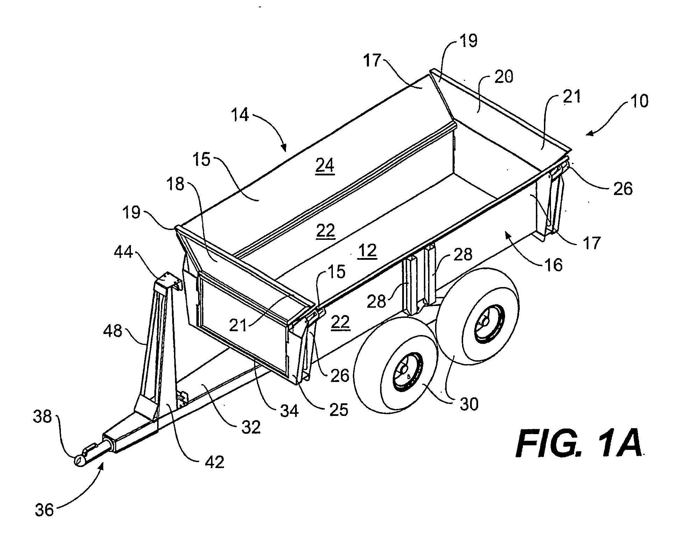

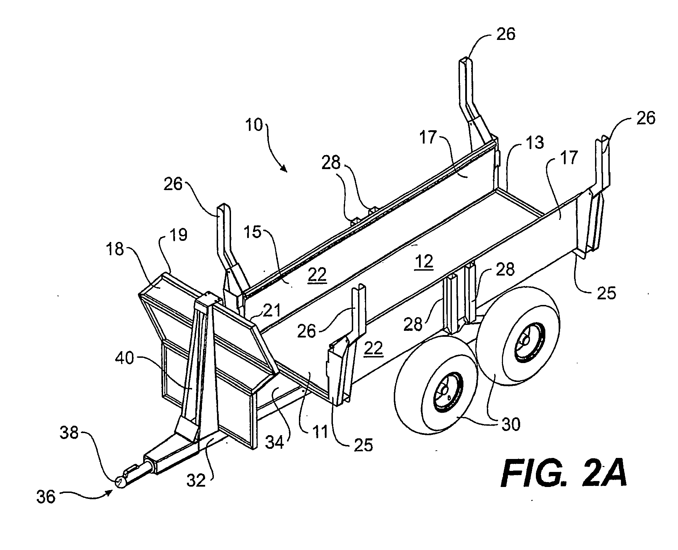

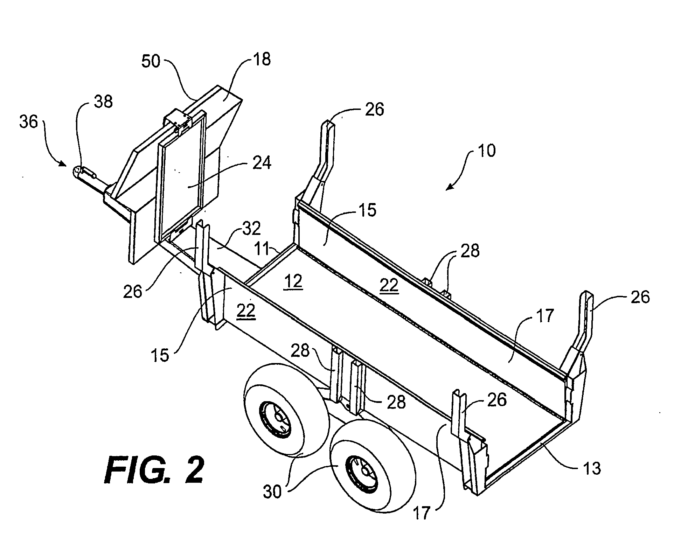

As shown in Figures 1, 1A, 2 and 2A, the utility trailer 10 of the present invention comprises a horizontal base 12, opposed vertical side walls 14, 16, and opposed vertical end walls 18, 20. Opposed side walls 14 and 16 each have a front end 15 and a rear end 17. Opposed end walls 18, 20 each have a right side 19 and a left side 21. Opposed side walls 14, 16 and the opposed end walls 18, 20 are preferably connected together around the perimeter of the horizontal base 12 to form an open-top box for carrying objects such as sand, mud, rock and other loose material. Of the opposed end walls 18 and 20, a front end wall 18 is placed near or at a front end 11 of the horizontal base 12, and a rear end wall is placed near or at a rear end 13 of the horizontal base 12. The front and rear directions of the horizontal base 12 are defined by the forward pulling direction of the utility trailer when towed behind a vehicle (not shown) travelling in a forward direction.

Best shown in Figures 1 and 1A, opposed side walls 14 and 16 each comprise a lower portion 22 and an upper portion 24. Upper portion 24 is preferably angled toward the exterior of the box-type structure in order to increase the loading capacity of the utility trailer 10. The upper portion 24 of each wall 14, 16 is preferably removable from the utility trailer 10.

Vertical posts 26 are used to secure the opposed sidewalls 14, 16 and the opposed end walls 18, 20 to the horizontal base 12 and provide rigidity to the utility trailer 10. Vertical posts 26 are preferably part of a U-shaped structure 25 comprising a lower portion traversing below the horizontal base 12, and two side portions (vertical posts 26) extending vertically upward from the lower portion. One would appreciate that vertical posts 26 could also be attached directly to the perimeter of the horizontal base 12, thus eliminating the lower portion of the U-shaped structure 25.

The preferred embodiment has front and rear U-shaped structures 25 providing two right and two left vertical posts 26 as is best shown in Figures 2 and 2A where upper portions 24, front end wall 18 and rear end wall 20 have been removed from the horizontal base 12. Additional side posts 28 can be used to increase the rigidity of the utility trailer 10. Side posts 28 would also be U-shaped as described above with respect to U-shaped structures 25. In the preferred embodiment, side posts 28 do not extend above the horizontal base 12 as high as vertical posts 26, but as would be appreciated, side posts 28 could extend to the same height or even higher than vertical posts 26 if desired.

As is best shown in Figures 2 and 2A, the opposed end walls 18, 20 are removable from the horizontal base 12. As will be described in further detail below, at least one of the end walls 18, 20 is adapted to be attached to the tow member 32 to provide protection for the tow vehicle.

To permit easy travel of the utility trailer 10 over the ground, wheels 30 are provided below the horizontal base 12 in a known manner. In the preferred embodiment, two wheels 30 are placed on the right and left sides of the utility trailer 10 (wheels on the right-hand side of the utility trailer are not shown). Any known type of suspension system such as leaf springs could also be installed between the horizontal base 12 and the wheels 30 to reduce the jolting forces created when travelling across uneven terrain with the utility trailer 10.

A tow member 32 extends forwardly from the front end 13 of the horizontal base 12. The tow member 32 has a first end 34 attached to the horizontal base 12 and a second end 36 adapted to be attached to the tow vehicle (not shown). The second end 36 of the tow member 32 has a conventional hitch attachment 38 which is typically a cup-shaped member design to accept a ball attached behind the tow vehicle. Many different hitch attachments are known in the art thus a detailed description of the type shown in the Figures of the present application will not be given.

An end-wall support frame 40 extends vertically upward from the tow member 32 to accept at least one of the removable end walls 18, 20. The support frame 40 preferably comprises an elongated pyramidal-shaped structure rigidly fixed at a bottom end 44 to the tow member 32. End wall support frame 40 preferably has a square cross section which could be constructed from bent sheet metal or plates of metal welded together. It should be appreciated that other suitable shapes and/or materials could also be used. It is contemplated that the support frame 40 be permanently fixed to the tow member 32 or it could be detachable and re-attachable to different locations along the tow member 32 to adjust the distance between the towing vehicle and the material being transported.

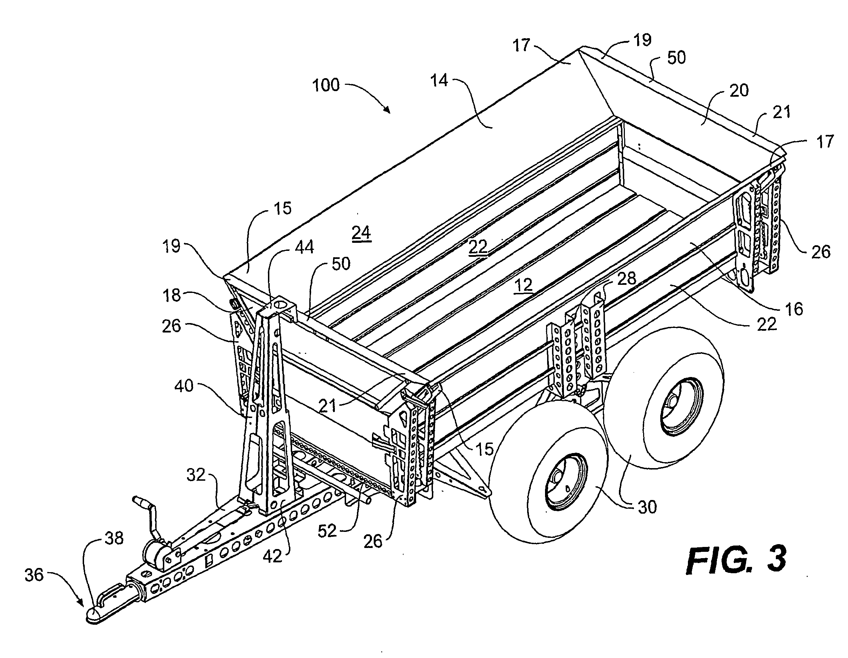

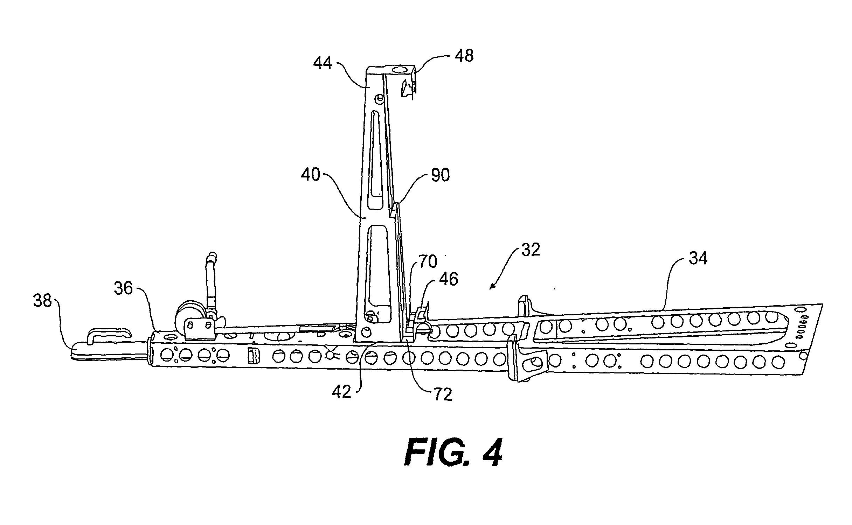

With reference to Figures 3 and 4, a second embodiment of the utility trailer 10 is shown. Utility trailer 100 is similar to utility trailer 10 therefor the reference numbers of the common parts will remain unchanged between utility trailers 10 and 100. Similar to utility trailer 10, utility trailer 100 has a horizontal base 12, opposed side walls 14, 15 and opposed end walls 18, 20. Each opposed sidewall 14, 15 also include a lower portion 22 and an upper portion 24. Upper portion 24 is preferably removable from the utility trailer 100. Opposed end walls comprise a front end wall 18 and a rear end wall 20. Front and rear end walls 18, 20 are preferably removable from the utility trailer 100.

Best shown in Figure 4, bottom end 42 and top end 44 of the end-wall support frame 40 further include attachment brackets 46 and 48 respectively. Brackets 46 and 48 receive and retain the end wall 18 or 20 to the end-wall support frame 40 to provide a protective shield against cargo sliding forward along the horizontal base 12.

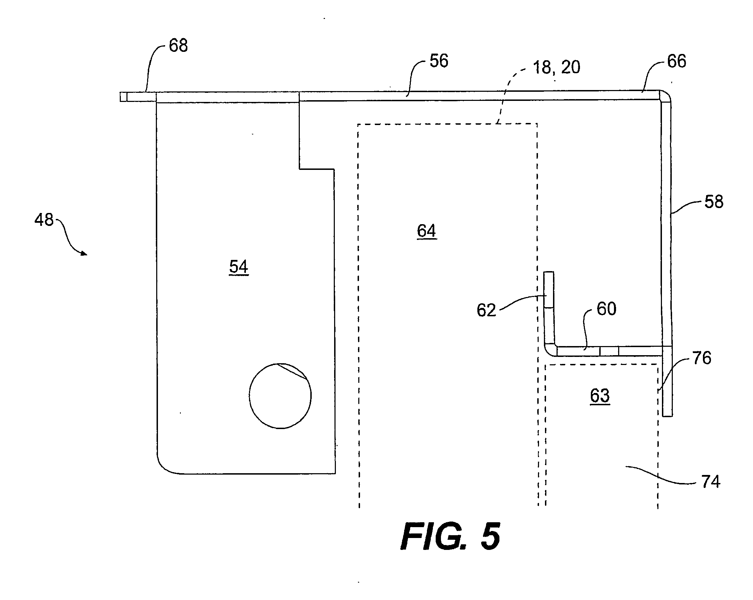

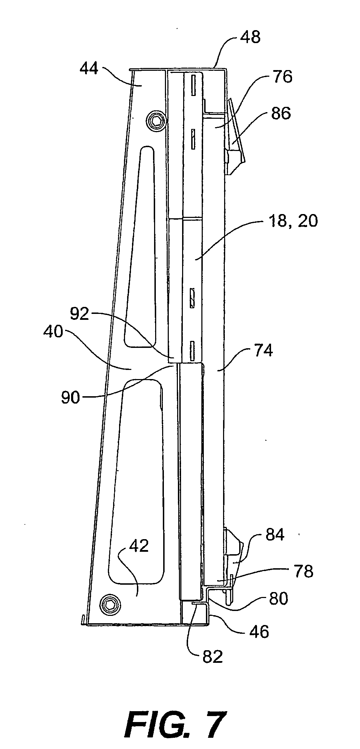

Figure 5 shows an exploded view of bracket 48 which is shaped to receive the top edge 50 of end walls 18 or 20 and a fastening wall 74 (best shown in Figures 2 and 7). Bracket 48 is preferably bent sheet metal or plates of metal welded together. Plates 54, 56, 58, 60 and 62 are constructed so as to form two spaces 63, 64 into which the top edge 50 of the end wall 18 or 20 and top edge 76 of fastening wall 74 will be inserted when the end wall 18 or 20 is to be attached to the end wall support frame 40. Plate 56 is attached at a first end 66 to plate 58 and at a second end 68 to the top end 44 of end wall support frame 40. Plate 54 also attaches to plate 56 and to the end wall support frame 40 for additional support.

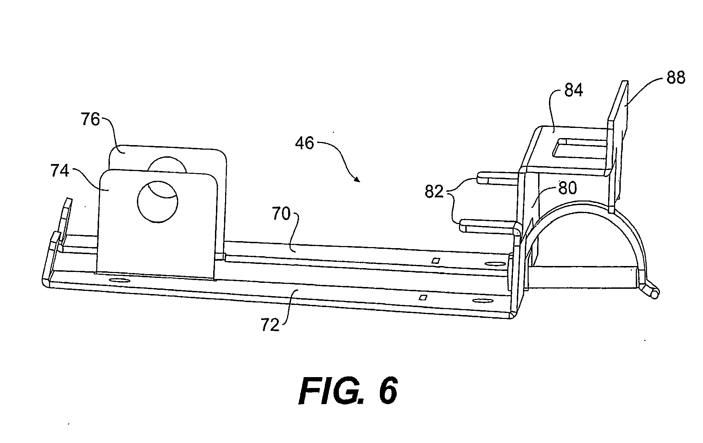

Figure 6 shows an exploded view of bracket 46 which is shaped to receive the bottom edge 52 of the end walls 18 or 20 and bottom edge 78 of fastening wall 74. As with bracket 48, bracket 46 is preferably bent sheet metal or plates of metal welded together to form the desired shaped. Bracket 46 includes two parallel base legs 70, 72 which are placed between the bottom end 42 of the end wall support frame 40 and the tow member 32 as is best shown in figure 4. Extending vertically from base legs 70, 72 are two plates 74, 76 which are used to further secure the bracket 46 to the end wall support frame 40. It is contemplated that legs 70, 72 could be welded to the tow member 32 and also to the end wall support frame 40 to fasten the bracket 46 in a desired position along tow member 32. Also extending vertically from legs 70, 72 is plate 80. Plate 80 has two horizontal portions 82 extending perpendicular to plate 80 and parallel to base legs 70, 72. As is best shown in figure 7, the bottom edge 52 of end wall 18 or 20 will be partially supported by the horizontal portions 82 between plate 80 and the bottom end 42 of the end wall support frame 40.

To further vertically support the end wall 18 or 20, the end wall support frame 40 has a rearwardly extending lip 90 upon which a corresponding forwardly extending lip 92 of the end wall 18 or 20 is seated. When the end wall 18 or 20 is pushed against the end wall support frame 40 as discussed above, lip 92 sits upon lip 90 and thus also prevents the end wall from any downward vertical movement.

End wall 18 or 20 is preferably slided sideways into brackets 46 and 48 through side openings formed between plate 62 and the end wall support frame 40 of bracket 48 and between plate 80 and the end wall support frame 40 of bracket 46. This enables the distance between plate 56 of bracket 48 and horizontal legs 82 of bracket 46 to be fixed to the corresponding height of the end wall 18 or 20 thus reducing any unnecessary play between the end wall and the brackets when assembled together. As will be appreciated by the above description, the end wall 18 or 20, once inserted into brackets 46 and 48, will be prevented from moving vertically by plate 56 of bracket 48 and the horizontal portions 82 of bracket 46, rearward horizontal movement will be prevented by plate 62 of bracket 48 and plate 80 of bracket 46 and forward horizontal movement will be prevented by the end wall support frame 40.

To ensure that the end wall 18 or 20 does not inadvertently slide out of the brackets 46 and 48, a fastening wall 74 along with two attachment clips 84, 86 attach to brackets 46 and 48 as is shown in figure 7 and push the end wall 18 or 20 up against the end wall support frame 40. As with the end wall 18 or 20, fastening wall 74 is preferably slided into brackets 46 and 48 through the side openings formed between plate 58 and the end wall 18 or 20 on the top 76, and bracket 88 and the end wall 18 or 20 on the bottom 78.

With the end wall 18 or 20 and the fastening wall 74 in place, preferably with the end wall support frame 40 centered with respect to the width of the end wall 18 or 20 and the fastening wall 74, the attachment clips 84 and 86 are closed thus pushing the end wall 18 or 20 against the end wall support frame 40 such that the end wall 18 or 20 cannot inadvertently become detached from the end wall support frame 40.

Although only one of the end walls 18 or 20 are shown to be attached to the end wall support frame 40, it is contemplated that both end walls 18 and 20 could be attached to the end wall support frame 40 by having additional brackets 46 and 48 placed on the front side of the end wall support frame 40 and having the second end wall attach to the additional brackets as is described above.

It is also contemplated that the end wall support frame 40 could be permanently attached, or a part of, the end wall 18 or 20 such that the end wall support frame-end wall assembly is selectively attachable to and detachable from the tow member 32 whenever the utility trailer is to be used without the front and/or rear walls. The inventor has further contemplated that two end wall support frames could be used, each to support one end wall.

While the invention has been described with reference to several preferred embodiments, it will be understood by those skilled in the art that various changes may be made and equivalents may be substituted for elements thereof without departing from the spirit and scope of the present invention. In addition, many modifications may be made to adapt a particular situation, component, or material to the teachings of the present invention without departing from its teachings.

## Claims

1. A utility trailer (10) comprising:
a horizontal base (12) having opposed front (11) and rear (13) ends and opposed sides (19, 21);
an end wall (18 or 20) removably attached to the horizontal base (12) at one of the opposed ends (11, 13)
at least two wheels (30) supporting the horizontal base (12);
a tow member (32) extending forwardly of the front end (15) of the horizontal base (12) and including an end (36) adapted to connect to a tow vehicle;
**characterized in that** the end wall (18 or 20), when removed from the horizontal base (12), is removably attachable to the tow member (32), to provide protection from objects on the horizontal base (12) that slide towards the tow vehicle.

2. A utility trailer as recited in claim 1, wherein the tow member (32) further comprises an end-wall support frame (40) for providing removable attachment of the end wall (18 or 20) to the tow member (32).

3. A utility trailer as recited in claim 1 or 2, wherein the end wall (18 or 20) is a front end wall (18).

4. A utility trailer as recited in claim 1 or 2, wherein the end wall (18 or 20) is a rear end wall (20).

5. A utility trailer as recited in any one of the preceding claims, further comprising a second end wall (20 or 18) removably attached to the horizontal base (12) at the other of the opposed ends (11,13); the second end wall, when removed from the horizontal base (12), being removably attachable to the tow member (32), to provide additional protection from objects on the horizontal base (12) that slide towards the tow vehicle.

6. A utility trailer as recited in any one of the preceding claims, further comprising opposed side walls (14, 16) extending from the opposed sides (19, 21) of the horizontal base (12).

7. A utility trailer as recited in any one of claims 2-6, wherein the end-wall support frame (40) comprises a pyramidal-shaped structure having a bottom end (42) attached to the tow member (32) and a top end (44)) vertically above the bottom end (42), the bottom end (42) and the top end (44) each having a brackets (46, 48) to which the end wall (18 or 20) can be attached.

## Patentansprüche

1. Ein Nutzfahrzeuganhänger (10), der folgendes umfasst:
- eine horizontale Basis (12) mit gegenüberliegenden Vorder- (11) und hinteren Enden (13) und gegenüberliegenden Seiten (19, 21);
- eine Endwand (18 oder 20), die lösbar an der horizontalen Basis (12) an einem der gegenüberliegenden Enden (11, 13) befestigt ist,
- mindestens zwei Räder (30), die die horizontale Basis (12) tragen;
- ein Abschleppelement (32), das vom vorderen Ende (15) der horizontalen Basis (12) aus nach vorne hin verläuft und einschließlich einem Ende (36), das dafür geeignet ist, um mit einem Abschleppfahrzeug verbunden zu werden;
**gekennzeichnet dadurch, dass** die Endwand (18 oder 20), wenn diese von der horizontalen Basis (12) abgenommen ist, lösbar am Abschleppelement (32) befestigbar ist, um für einen Schutz vor sich auf der horizontalen Basis (12) befindlichen Gegenständen, die in Richtung zum Abschleppfahrzeug gleiten, zu sorgen.

2. Ein Nutzfahrzeuganhänger nach Anspruch 1, wobei das Abschleppelement (32) des weiteren einen Endwand-Tragrahmen (40) umfasst, um eine lösbare Befestigung der Endwand (18 oder 20) am Abschleppelement (32) zu gestatten.

3. Ein Nutzfahrzeuganhänger nach Anspruch 1 oder 2, wobei die Endwand (18 oder 20) eine vordere Endwand (18) ist.

4. Ein Nutzfahrzeuganhänger nach Anspruch 1 oder 2, wobei die Endwand (18 oder 20) eine hintere Endwand (20) ist.

5. Ein Nutzfahrzeuganhänger nach einem der vorangehenden Patentansprüche, des weiteren eine zweite Endwand (20 oder 18) umfassend, die lösbar an der horizontalen Basis (12) am anderen der gegenüberliegenden Enden (11, 13) befestigt ist, wobei die zweite Endwand, wenn diese von der horizontalen Basis (12) abgenommen ist, lösbar an dem Abschleppelement (32) befestigbar ist, um für einen zusätzlichen Schutz vor sich auf der horizontalen Basis (12) befindlichen Gegenständen, die zum Abschleppfahrzeug hin gleiten, zu sorgen.

6. Ein Nutzfahrzeuganhänger nach einem der vorangehenden Patentansprüche, des weiteren gegenüberliegende seitliche Wände (14, 16) umfassend, die von den gegenüberliegenden Seiten (19, 21) der horizontalen Basis (12) aus verlaufen.

7. Ein Nutzfahrzeuganhänger nach einem der Patentansprüche 2 - 6, wobei der Endwand-Tragrahmen (40) eine pyramidenförmig ausgebildete Struktur mit einem Bodenende (42) umfasst, das an dem Abschleppelement (32) befestigt ist, und ein oberes Ende (44), das senkrecht oberhalb des Bodensendes (42) liegt, wobei das Bodenende (42) und das obere Ende (44) jeweils mit einem Bügel (46, 48) versehen sind, an welchem die Endwand (18 oder 20) befestigt werden kann.

## Revendications

1. Remorque utilitaire (10) comprenant:
une base horizontale (12) ayant des extrémités opposées antérieure (11) et postérieure (13) et
des côtés opposés (19, 21);
une paroi d'extrémité (18 ou 20) fixée sous forme détachable à la base horizontale (12) de l'une des extrémités opposées (11, 13) au moins deux roues (30) supportant la base horizontale (12);
un membre remorqueur (32) s'étendant vers l'avant de l'extrémité antérieure (15) de la base horizontale (12) et comprenant une extrémité (36) adaptée pour se connecter à un véhicule remorqueur;
**caractérisée en ce que** la paroi d'extrémité (18 ou 20), lorsqu'elle est retirée de la base horizontale (12), est amovible sous forme détachable au membre remorqueur (32), afin de fournir une protection à partir d'objets sur la base horizontale (12) qui se déplacent vers le véhicule remorqueur.

2. Remorque utilitaire comme citée dans la revendication 1, où le membre remorqueur (32) comprend une structure de support de paroi d'extrémité (40) afin de fournir une fixation amovible de la paroi d'extrémité (18 ou 20) au membre remorqueur (32).

3. Remorque utilitaire comme citée dans la revendication 1 ou 2, où la paroi d'extrémité (18 ou 20) est une paroi d'extrémité antérieure (18).

4. Remorque utilitaire comme citée dans la revendication 1 ou 2, où la paroi d'extrémité (18 ou 20) est une paroi d'extrémité arrière (20).

5. Remorque utilitaire comme citée dans l'une des quelconques revendications précédentes, comprenant en outre une deuxième paroi d'extrémité (20 ou 18) fixée de manière détachable à la base horizontale (12) dans l'autre des extrémités opposées (11,13); la deuxième paroi d'extrémité, lorsqu'elle est retirée de la base horizontale (12), étant fixable de manière détachable au membre remorqueur (32), afin de fournir une protection supplémentaire à partir d'objets sur la base horizontale (12) qui coulissent vers le véhicule remorqueur.

6. Remorque utilitaire comme citée dans l'une des quelconques revendications précédentes, comprenant en outre des parois latérales opposées (14, 16) s'étendant depuis les côtés opposés (19, 21) de la base horizontale (12).

7. Remorque utilitaire comme citée dans l'une des quelconques revendications 2-6, où la structure de support de paroi d'extrémité (40) comprend une structure de forme pyramidale ayant une extrémité inférieure (42) fixée au membre remorqueur (32) et une extrémité supérieure (44) verticalement au-dessus de l'extrémité inférieure (42), l'extrémité de fond (42) et l'extrémité de partie supérieure (44) ayant chacune des brides d'attaches (46, 48) auxquelles la paroi d'extrémité (18 ou 20) peut être fixée.
